# EUROPEAN PATENT SPECIFICATION

(11) **EP 2 365 903 B1**
(45) Date of publication and mention of the grant of the patent: **24.04.2013**
(21) Application number: 09828423.5
(22) Date of filing: 10.12.2009
(51) Int. Cl.: B29D 30/06, B29C 33/24

(54) **MACHINE AND METHOD FOR CURING RAW TIRE CARCASSES**
MASCHINE UND VERFAHREN ZUM VULKANISIEREN VON ROHREIFENKARKASSEN
MACHINE ET PROCÉDÉ POUR DURCIR DES CARCASSES DE PNEU BRUTES

(30) Priority: 11.12.2008 IT FI20080237
(43) Date of publication of application: 21.09.2011
(73) Proprietor: Entiga Group S.a.s., 51032 Pistoia (IT)
(72) Inventor: GALIGANI, Tiziano, I-51032 Pistoia (IT); GALIGANI, Enrico, I-37067 Valeggio Sul Mincio (VR) (IT)
(74) Representative: Mincone, Antimo
(86) International application number: PCT/IT2009/000556
(87) International publication number: WO 2010/067394

(56) References cited:
- DE-A1- 4 301 348
- FR-A- 1 453 942
- GB-A- 1 386 760

## Description

The present invention relates to a machin and a method for curing raw tire carcasses.

Machines for curing raw tire carcasses comprising an annular mould with more radial sectors which can be radially moved, both centrifugally and centripetally, with respect to a base surface of the mould are known. Said sectors are connected with a corresponding device by means of which they can be radially moved inside the mould.

GB 1386760 and FR 1453942 disclose moulds for vulcanizing tyres

It is also known that a typical operating cycle of a machine for curing tire carcasses basically comprises a phase in which a raw tire is introduced into the mould after centrifugally moving the radial sectors, a subsequent phase in which the sectors are positioned close to the raw tire, then a phase in which the upper base of the mould, into which the raw tire has previously been introduced, is closed, a phase in which an annular chamber, or annular "bladder" or "membrane", which is inside the mould, is pressurized by introducing a heating fluid under pressure and, after a predetermined time, a succession of reverse phases so that the cured tire can be extracted from the mould.

The main aim of the present invention is to propose a machine whose mechanical structure is simpler than that of the known machines and which works according to a more advantageous operating cycle, as regards reliability, cost and quality of the finished product. These results have been achieved, according to the present invention, by adopting the idea of making a machine having the features described in claim 1 and a method of curing a tyre according to claim 7. Further features of the present invention are the subject the dependent claims.

Thanks to the present invention, it is possible to realize a machine for curing tire carcasses having a particularly simple mechanical structure which, besides, allows the execution of an advantageous curing cycle both in relation to production costs and to quality of the finished product. Moreover, a machine according to the present invention can advantageously be used for curing raw tires and for reconstructing or covering treads on used tires.

Every technician who works in this field will better understand these and further advantages and features of the present invention thanks to the following description and to the enclosed drawings which are provided to show exemplificative embodiments of the invention but are not to be considered in a limitative sense, wherein:
- Fig. 1 shows a schematic vertical section view of a machine for curing tires according to the invention;
- Fig. 2A shows a horizontal section view of a group of radial sectors of the machine in the operative position (continuous lines) and in the inoperative position (dashed lines);
- Fig. 2B shows a schematic vertical section view of a radial sector in the sheath 15;
- Figs 3-10 schematically show a sequence of phases in an operating cycle carried out according to the present invention:
- Fig. 11A shows a detail of Fig 2B;
- Fig. 11B shows a schematic section view according to the line H-H of Fig. 11A;
- Fig. 12 shows an operating pressure diagram in correspondence of various zones of the machine and of various phases of the cycle carried out by the machine;
- Fig. 13 is a view analogous to that of Fig. 1, but it shows a machine for curing earth moving vehicle tires;
- Fig. 14 is a view analogous to that of Fig. 2 but it shows the machine of Fig. 12:
- Fig. 15 is a view analogous to that of Fig. 14 and shows the linking of the sectors;
- Fig. 16 schematically shows a device for handling the tires.

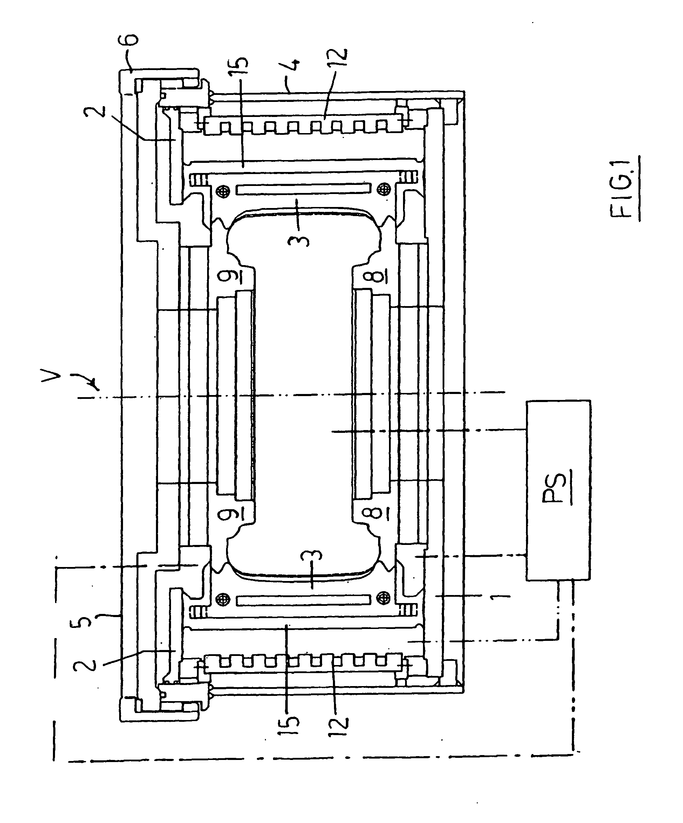

Except in Fig. 1, for simplicity's sake, the enclosed drawings show only an half of the machine, which is symmetrical around a vertical central axis V.

Analogously to the known machines, a machine for curing tire carcasses according to the present invention comprises a structure with a lower horizontal crown 1 and an upper horizontal crown 2 between which more vertical sectors 3 are positioned and can be radially moved with respect to the crowns 1 and 2. Said sectors 3 are slidingly mounted on the upper surface of the lower crown 1 and on the lower surface of the upper crown 2 and exhibit a side (internal side), turned towards the central zone of the mould (whose definition is given below) with a suitably engraved surface, so as to provide the moulding of the tread on the raw tires PC. Moreover, said structure exhibits a fixed cylindrical skirt 4 which supports and houses the elements positioned therein and to which an upper lid 5 can be fixed by means of an annular locking belt 6. When a raw tire PC is introduced into the machine and when a cured tire PV is extracted from the machine, the belt 6 is in an unlocking position and the lid 5 is raised, that is to say distanced from the group underneath. During the curing phase of a tire, instead, the lid 5 is locked to the skirt 4 by means of the locking belt 6. A central housing for an expandable membrane or "bladder" 7 is also provided and said bladder, in cooperation with the sectors 3 and with shaped surfaces 8, 9, which are solid to the lower crown 1 and respectively to the lid 5, during the curing phase determines the moulding of the tire tread and of the flanks inserted in the mould. Moreover, as further described below, a machine according to the present invention operates according to a cycle which basically comprises the following phases:
- centrifugal withdrawal of the sectors 3 and raising of the lid 5 so as to provide a central zone apt to receive a raw tire;
- positioning of a raw tire PC into said central zone of the mould;
- positioning of the membrane 7 in the centre of the mould;
- centripetal forward motion of the sectors 3 and 4 and closing of the lid 5;
- fixing of the lid 5 on the skirt 4 ;
- pressurizing and heating of the internal part of the membrane 7 and heating of the sectors 3 and of the surfaces 8 and 9;
- de-pressurizing of the membrane 7;
- centrifugal withdrawal of the sectors 3 and raising of the lid 5 after its unlocking;
- removal of the membrane 7 and extraction of the cured tire PV.

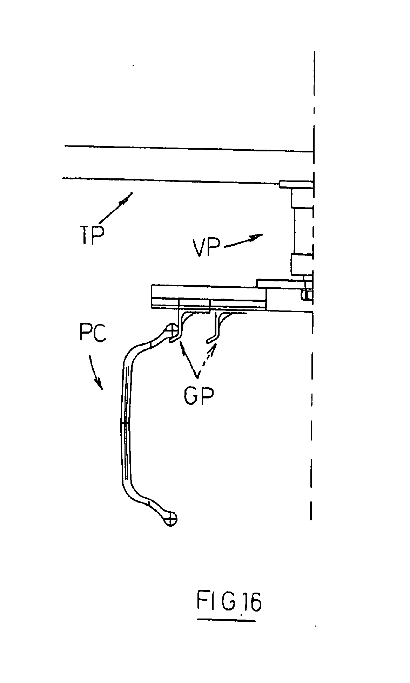

The handling of the tires is controlled by a known device comprising, as schematically shown in Fig. 16, a hook GP to which the heel of a tire to be introduced into the machine (and respectively to be extracted from the machine) can be hooked. Said handling device is connected with a vertical actuator VP which, in turn, can be moved along a horizontal track TP so the hook GP, and the tire suspended to it, can be moved both horizontally and vertically.

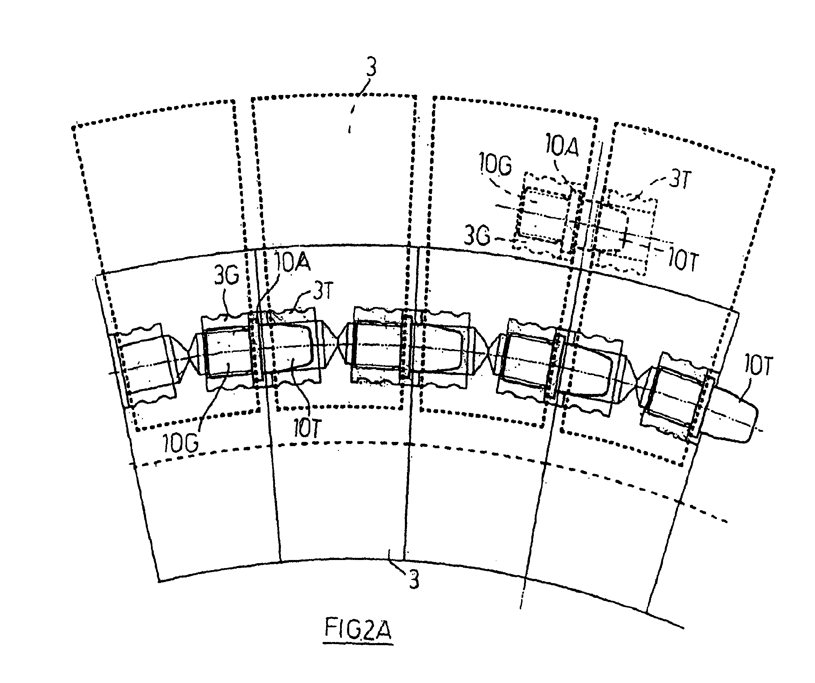

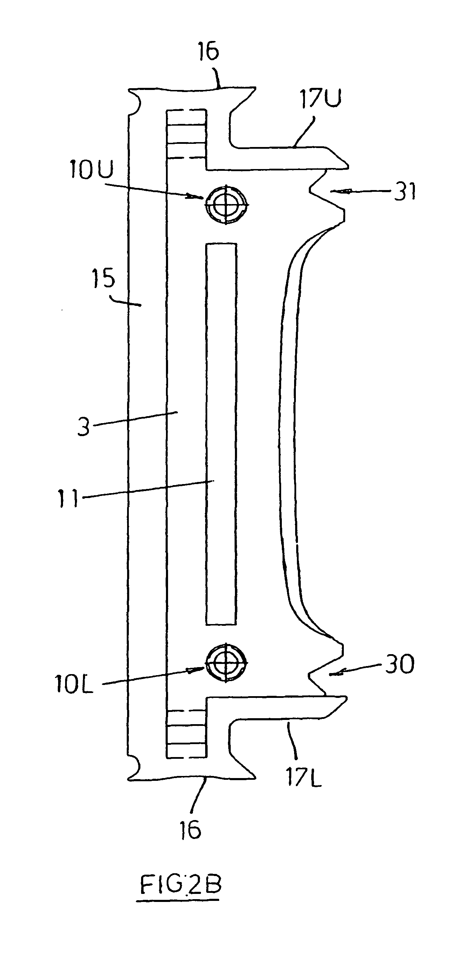

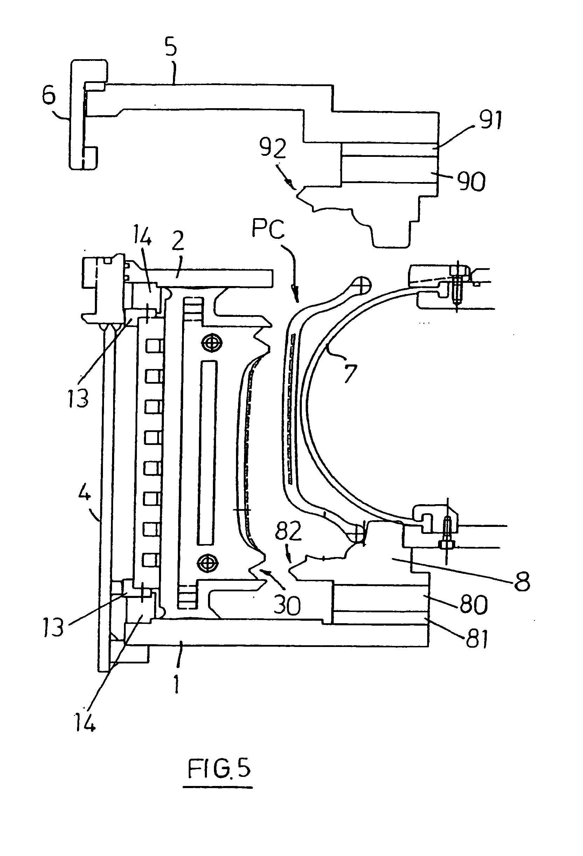

Said sectors 3 are suitably connected to each other so as to form a group of interconnected elements and to ensure the circularity of the group, particularly when the sectors 3 are in the curing position (position shown with continuous lines in Fig. 2A). With reference to the example shown in Figs 1-10 of the enclosed drawings, the sectors 3 are connected to each other by means of a series of plugs 10U, 10L disposed at different levels so as to form a series of upper plugs 10U and a series of lower plugs 10L. Each of said plugs 10U, 10L exhibits a cylindrical stem 10G and a trunk-conical head 10T, with a central annular projection 10A separating the stem 10G from the head 10T. The stem 10G and the annular projection of each plug 10U, 10L are linked to a seat 3G provided by a flank of the corresponding sector 3 while the head 10T is slidingly housed in a seat 3T provided by the flank of the adjacent sector 3. Therefore, each sector 3 exhibits, on one flank, two seats 3G to which the stems 10G of an upper plug 10U and of a lower plug 10L are linked. Fig.2A shows only the plugs 10U of the upper series. The same drawing shows that the seats 3G, 3T provided by the flanks of the sectors 3 can be identical to each other so as to simplify the realization of the sectors. Fig 2 also shows that, when the sectors 3 are in the curing position, the heads 10T of the plugs are completely inserted in the flanks of the sectors 3, and when the sectors 3 are moved back, the heads of the plugs are partially outside the flanks of the sectors 3. In this way, the sectors 3 are interconnected, both at a higher level (by means of the plugs 10U) and at a lower level (by means of the plugs 10L) and can move both from the centre and towards the centre of the mould without being subject to uncoupling.

A steel bar 11 is positioned inside each sector 3 so as to allow its heating by induction in cooperation with an induction ring 12 which is inside the skirt 4 and coaxial to the latter. In particular, the induction ring 12 is connected to the skirt 4 by means of two thermally insulated rings 13 (an upper ring and a lower ring) which, in turn, are solid to the upper crown 2 and to the lower crown 1 by means of spacers 14. In this way, the induction ring 12 is solid to the fixed part of the mould, that is to say, solid to the skirt 4 and to the crown 1 and 2. In order to facilitate heating by induction of the sectors 3, said sectors can be realized in aluminium.

The sectors 3 are inside an elastic sheath 15 which wraps them in the back, top and bottom and which leaves uncovered the engraved side turned toward the centre of the mould (the latter being defined by the sectors 3, by the sheath 15 and by the elements 8 and 9 mentioned above). For example, said sheath 15 can be made of silicon or butylic rubber, that is, of any elastic material which is resistant to vulcanization pressures and temperatures.

Said sheath 15 exhibits an annular shape and the sectors 3 can be positioned therein by temporarily opening out its front lips so as to create a sufficient space for positioning the sectors into the corresponding internal cavity which also has an annular shape.

The sheath 15 exhibits two heels 16 (an upper heel and a lower heel) destined to be in contact with the lower side of the crown 2 and respectively with the upper side of the crown 1.

As further described below, the crowns 1 and 2 are two sliding and supporting elements of the sheath 15 during the backward and forward motion of the sectors 3 (that is to say during expansion and contraction of the sheath 15) in the space "A" comprised between the induction ring 12 and the central zone "C" where the membrane 7 operates. In other terms, during their forward and backward motion, the sectors 3 move in an annular space "A" delimited by the back side of the sheath 15 and by the induction ring 12.

The extensions 8 and 9 mentioned above (also called "flanks" of the mould) are applied on corresponding heating crowns 80, 90 and a ring 81, 91 made of a suitable thermal insulation material is interposed between each of said crowns and the corresponding support elements 1, 5. The heating crowns 80 and 90 can be heated by means of electric resistances provided inside the same crowns or by circulation of heating fluids in channels suitably disposed within the thickness thereof. The sectors 3 can also be heated by conventional means (for example, by means of electric resistances fed by cables passing through corresponding slots foreseen in the sheath 15 and through the chamber A and the shirt 4).

As the sheath 15 exhibits two front lips 17U, 17L which are vertically distanced from said heels 16, when the lid 5 is fixed to the shirt 4, a double annular chamber "B" results between the sheath 15 and the crowns 80 and 90. In other terms, the sheath 15 exhibits a front lip 17L which faces the group formed by the heating crown 80 and by the insulation ring 81 solid to the lower crown of the mould, and a front lip 17U which, when the lid is fixed to the skirt 4, that is to say during the curing phase, faces the heating crown 90 and the insulation ring 91 solid to the lid 5.

During the curing phase, the chamber "B" is delimited on its lower part, that is to say in correspondence of the lower part of the mould, by the lower heel 16 and by the lower lip 17L of the sheath 15, by the group formed by the crowns 80 and 81, by the fixed crown 1 and by a back projection 82 of the extension 8 whose free end fits with a corresponding indentation defined on the lower base of the front side of each sector 3; and on it upper part, the chamber "B" is delimited by the upper heel 16 and by the upper lip 17U of the sheath 15, by the group formed by the crowns 90 and 91, by the lid 5 and by a back projection 92 of the extension 9 whose free end fits with a corresponding indentation 31 defined on the upper base of the front side of each sector 3.

In practice, there are two chambers B parallel to each other, which, at least partly, are positioned between the chamber "A" and the central zone C of the machine.

Said chamber "A" is subject to the action of pressuring and de-pressuring means so that the sectors can be centripetally and centrifugally moved, as further described below. Said pressuring means are schematically shown by the block indicated by the reference "PS" of Fig. 1. These means comprise three independent units for pressurizing and de-pressurizing the chambers A, B and C controlled by automatic means which are per se known are not described in more detail.

The three independent units of said means PS are connected to the chambers A, B and C through corresponding ducts, represented by dashed lines in Fig. 1, which connect each unit to the corresponding chamber A,B or C. Said pressurization is carried out by means of vulcanizing fluids (which can be of different types, i.e. different from each other) .

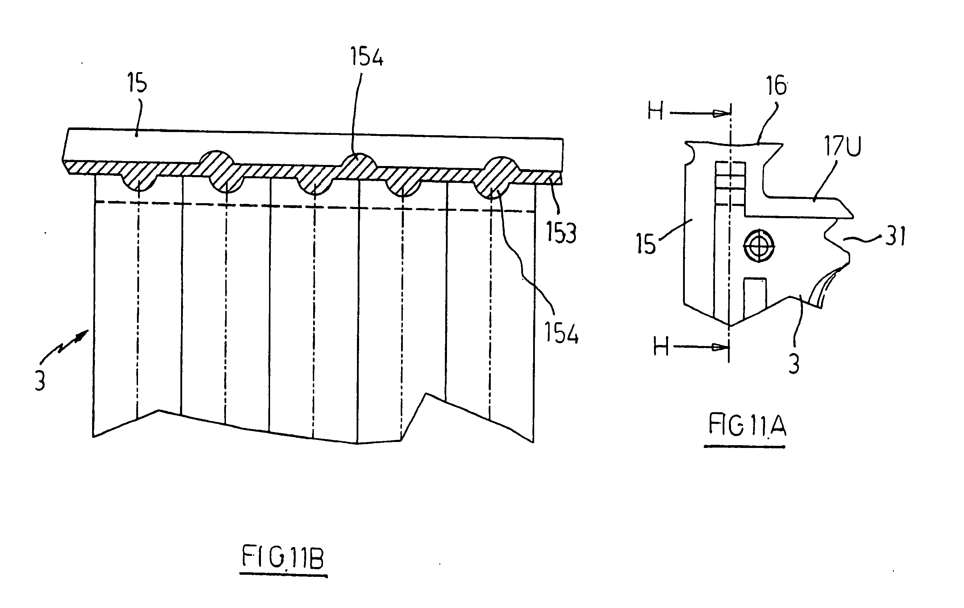

In order to achieve a more effective connection between the sheath 15 and the sectors 3, two elastic rings 153 (an upper ring and a lower ring) can be positioned between said sectors and the sheath 15 and each of said rings, as shown in Fig. 11B, exhibits a plurality of projections 154 which fit in corresponding cavities provided by the internal side of the sheath 15 in correspondence of each heel 16 and by each sector 3 in correspondence of each of the two parts destined to be internal to the heels 16. The material of said rings 153 can be the same as that of the sheath 15. Thanks to said rings 153, it is possible to ensure a much more effective synchronism among the sectors 3 during their backward and forward motion.

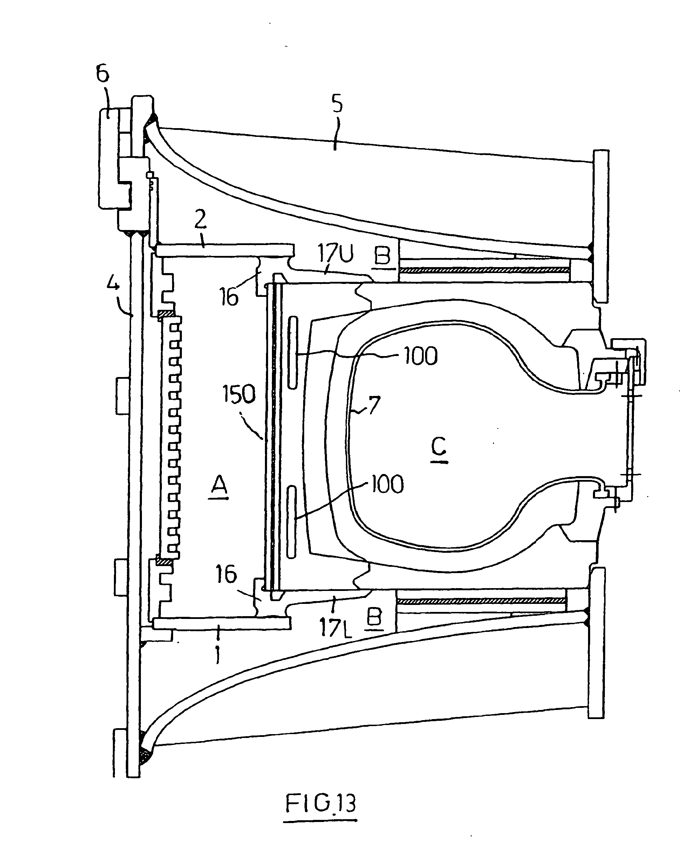

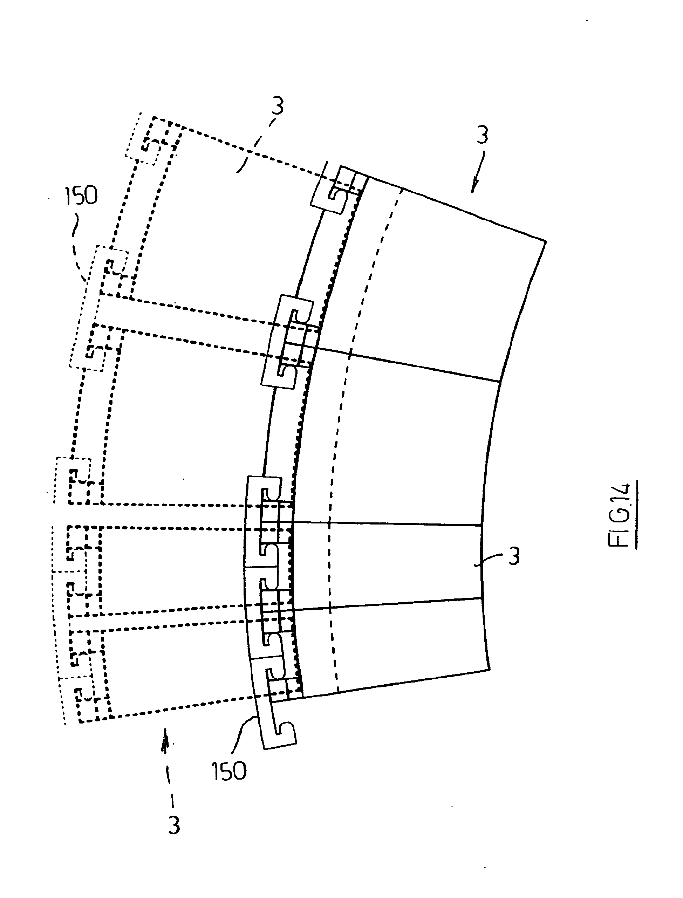

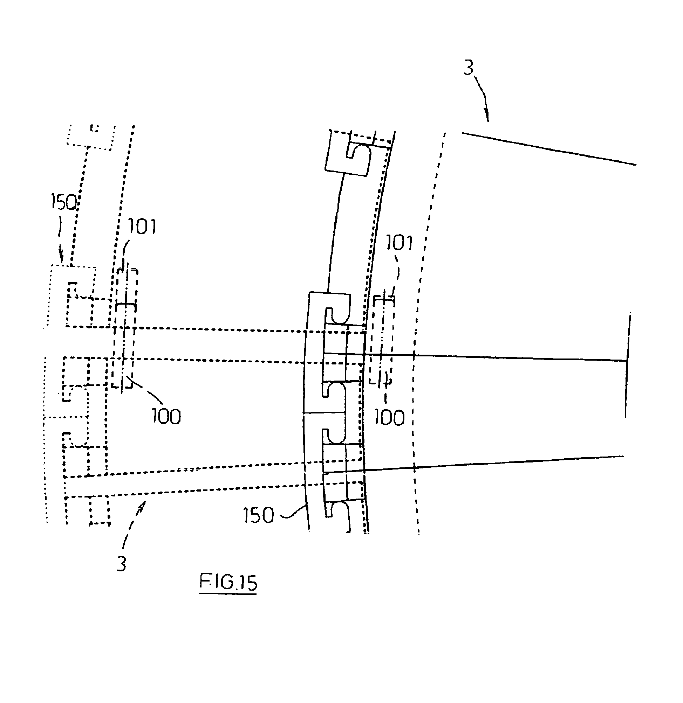

Said sheath 15 can be a single body, as schematically shown in Figs 1-11B or formed by more elements, as shown in Figs 13 and 14. In the latter case, the sheath 15 is formed by an upper ring and by a lower ring with respective heels 16 and front lips 17U, 17L united to each other by a plurality of contiguous segments or ledges 150 with a "C" shaped cross section which, on the whole, form the lateral surface of the sheath 15. As shown in particular in Fig. 14, each of said segments 150 is coupled in the back of two contiguous sectors 3, so that it exhibits one portion which is coupled to a sector 3 and another portion which is coupled to the adjacent sector 3. Moreover, as shown in Fig. 15, the sectors 3 can be connected to each other by means of lateral tongues 100, each of which is slidingly inserted in a corresponding seat 101 provided by an adjacent sector 3 (in practice, according to the example shown in Fig. 14 and Fig. 15, each sector 3 exhibits two tongues 100 and, on the opposite side, two seats 101 which house the tongues 100 of an adjacent sector 3).

The functioning of the machine described above is as follows.

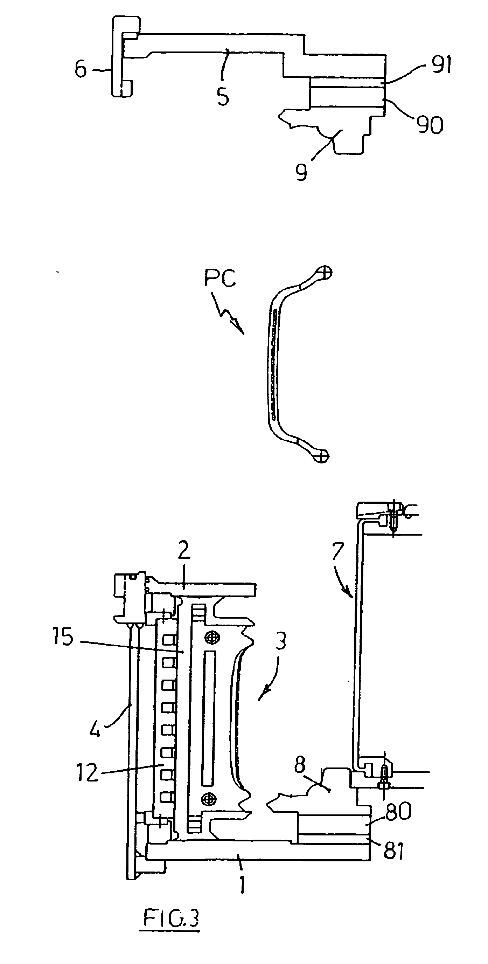

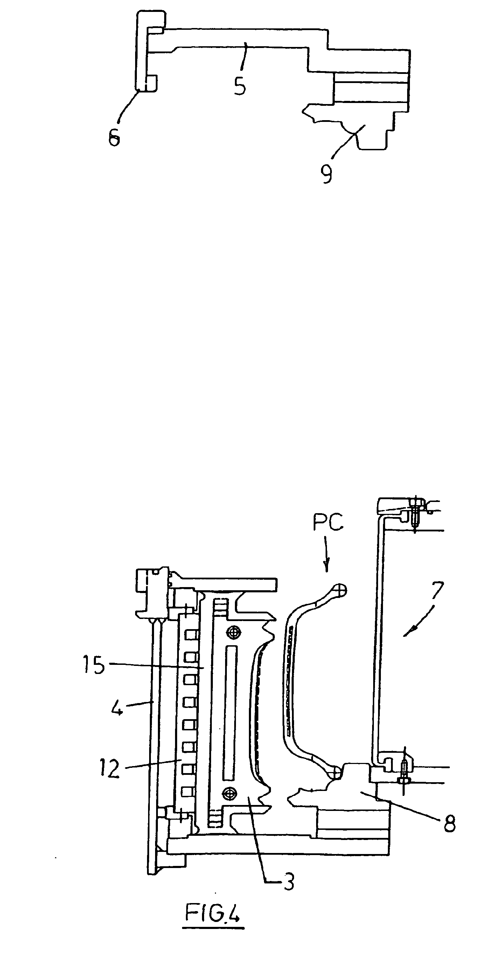

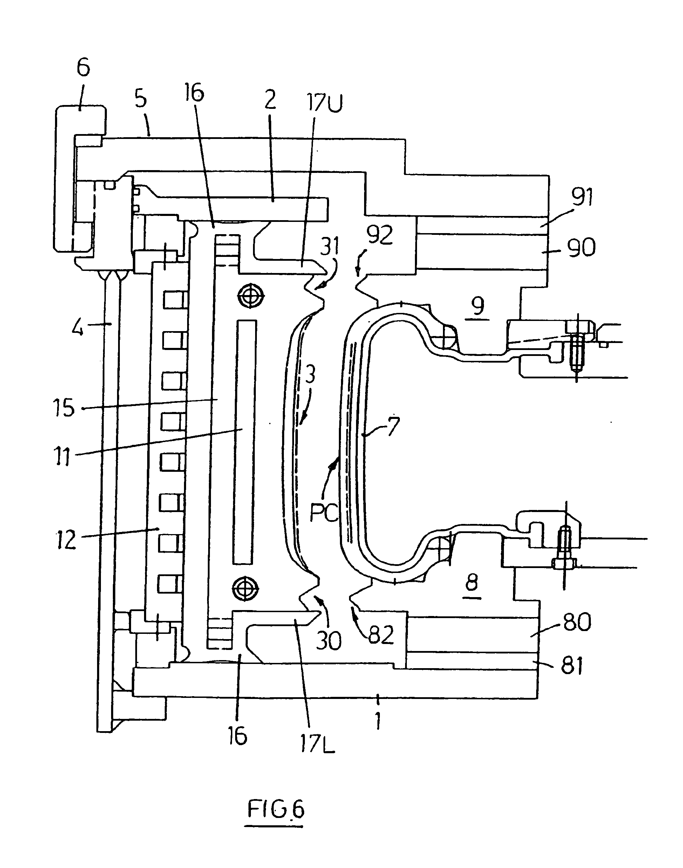

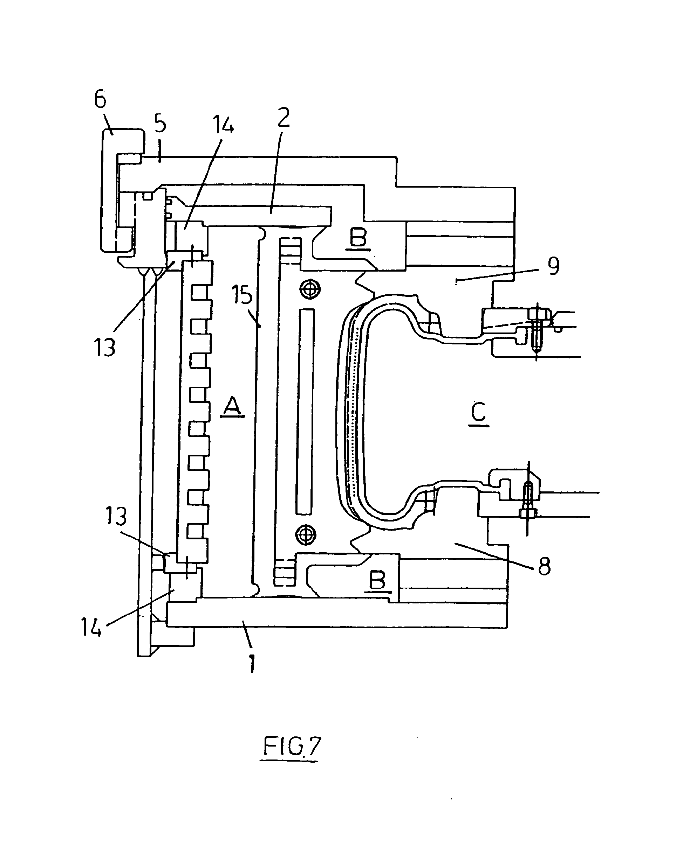

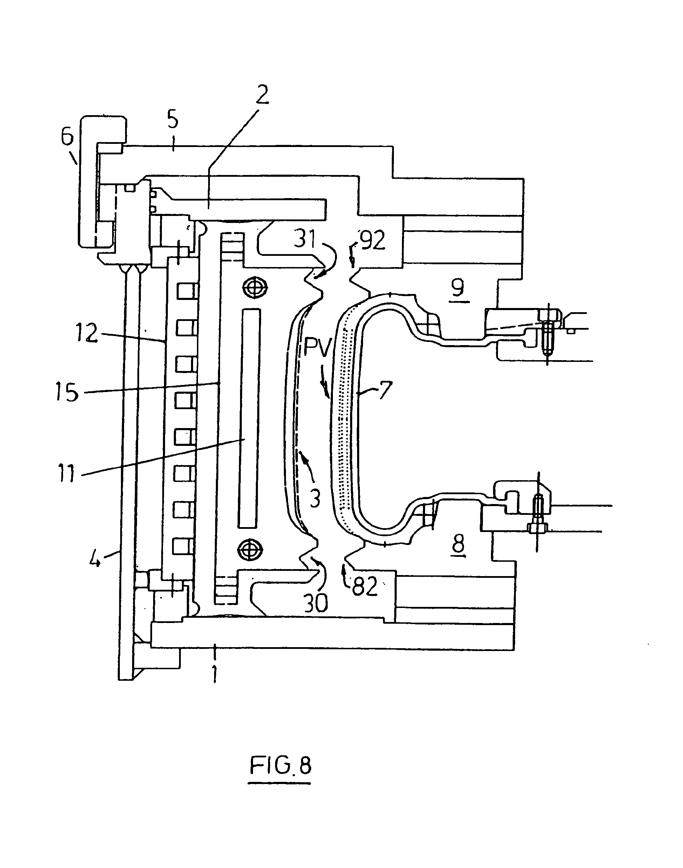

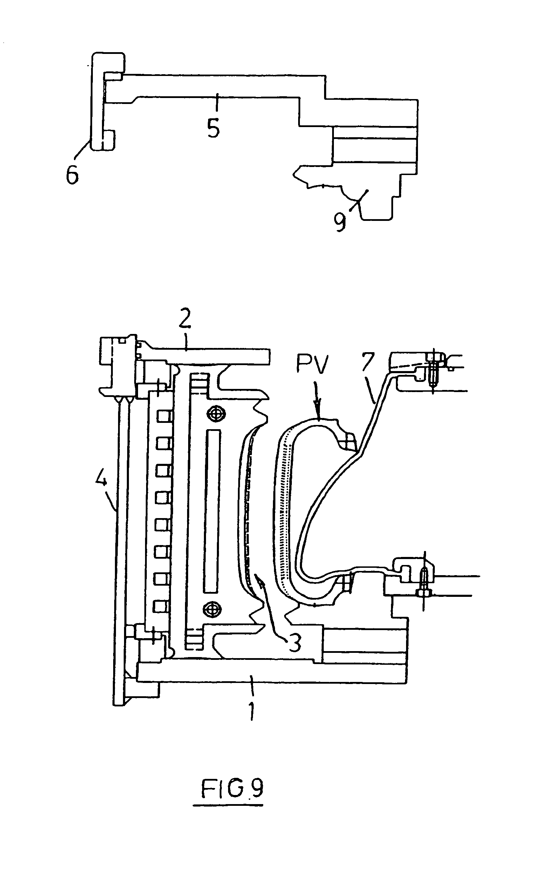

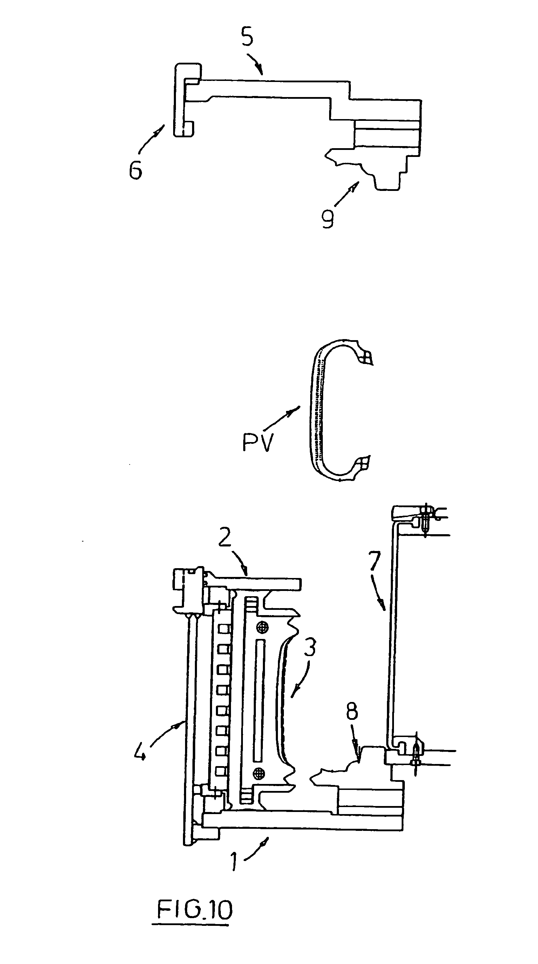

During the initial phase, the sectors 3 are drawn back and the lid 5 is raised, as shown in Fig. 3. In this phase, the chamber A is de-pressurized and the sectors 3 are drawn back. In a subsequent phase, a raw tire PC is positioned into the machine, such that the lower heel of the tire comes into contact with the extension 8, as shown in Fig. 4. Then, the lid 5 is lowered, while the membrane 7 is partially pressurized, so the upper heel of the tire is in contact with the extension 9 of the lid 5 and the latter is fixed to the skirt 4 by means of the locking ring 6 (see Fig. 6). In this way, the tire to be cured is locked between the membrane 7 (which is internal to the tire) and the extensions 8 and 9 (which are external to the tire). The chamber A is subsequently pressurized so that the sectors 3 move radially and centripetally until their corresponding front depressions 30 and 31 fit the shaped ends 82 and 92 of the extensions 8 and 9 as illustrated in Fig. 7, so that the double annular chamber B is closed. Before the double chamber B is completely closed, air is sucked from the double chamber B to avoid the formation of air bubbles between the tire and the sectors 3 or the extensions 8 and 9 which might hinder a correct moulding (it is therefore possible to avoid realizing channels or passing holes in the sectors 3 from which air can come out or be sucked like in conventional systems). When the double chamber B is completely closed, it is pressurized by equalizing the pressure exerted in the chambers A and C (the pressure of the latter, in the meantime, has been brought to the predetermined vulcanization value). The mould is kept in this configuration for a predetermined time, during which the combined action of the pressure and of the temperature on the heated material of the tire determine its vulcanization, as the sectors 3 are heated, like the extensions 8 and 9 and the membrane 7. After a given time necessary to carry out the curing process, the chamber A is de-pressurized (the pressure in chamber A is made equal to the atmospheric pressure) so the sectors 3 move centrifugally backward, as shown in Fig. 8, and chambers B and C are de-pressurized as well, whereas chamber A is further de-pressurized. Then, the lid 5 is unlocked and the membrane 7 is moved away, as shown in Fig. 9. At this point, the cured tire is extracted from the mould, as schematically shown in Fig. 10. In order to hold the sectors 3 drawn back, depression is maintained in chamber A for a time necessary to move the cured tire PV away and to introduce another tire to be cured into the mould.

What has been said with reference to a raw or "green" or "virgin" tire is valid also for a used tire whose tread is to be reconstructed.

Moreover, the operating cycle described above is valid not only for motor vehicle and vehicle tires but also for the production of tires for earth moving vehicles, light-duty and heavy-duty vehicles, agricultural vehicles and aircraft vehicles.

In any case, as previously described, the motion of the sectors 3 is determined by the pressurization/de-pressurization of the chambers A and B, that is, by the difference in pressure between the chambers A and B. By injecting fluid under pressure into the chamber A, i.e. by increasing the pressure of the chamber A with respect to the pressure of the chamber B, it is possible to obtain the centripetal forward motion of the sectors 3 towards the zone of the mould occupied by the tire tread under treatment; by pressurizing the chamber B, i.e. by increasing the pressure of the chamber B with respect to the pressure of the chamber A, it is possible to obtain the centrifugal backward motion of the sectors 3 which thus move away from the tire. Moreover, by keeping the chamber A under depression, the sectors 3 remain drawn back so as to overcome the elastic resistance of the sheath 15.

In other terms, the machine is so structured that it exhibits a plurality of pressurizable concentric chambers, with a chamber A which is positioned in the back with respect to the crown formed by the sectors 3, a chamber C which is internal to said crown and in which the membrane 7 acts, and a chamber B (double in the example mentioned above, as it is divided into an upper part and a lower part) which, at least partly, is in front of the sectors 3 so as to be, at least partly, in a front position with respect to the same sectors (as shown in the enclosed drawings, the double chamber B, in fact, exhibits a zone extending in front of the sheath which wraps the sectors). In this way, by pressurizing the back chamber A, it is possible to obtain the centripetal forward motion of the sectors 3, whereas, by pressurizing the front chamber B, it is possible to obtain their backward motion, as previously said.

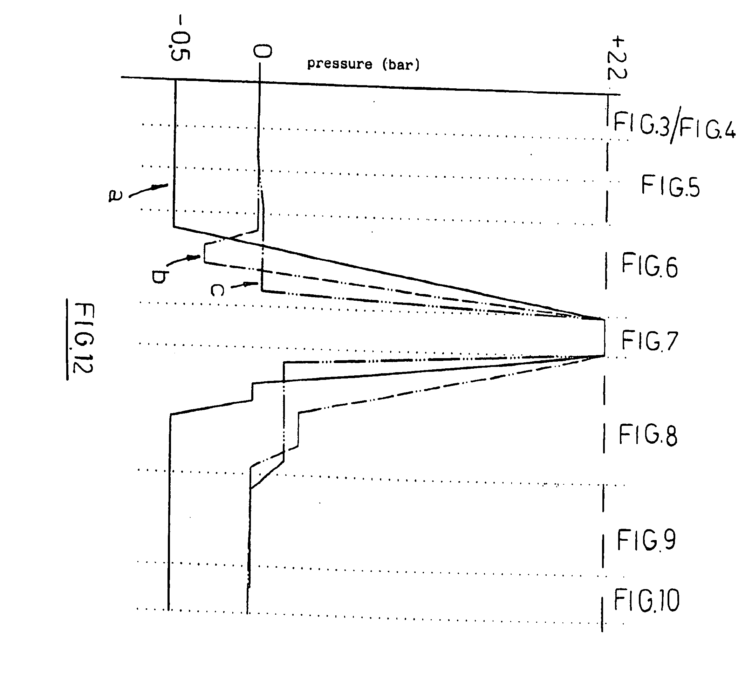

The diagram of Fig. 12 graphically shows the pressure trend in each of said chambers A, B and C according to time variation, that is during the various phases of the operating cycle described above. In the diagram, the various phases are indicated with reference to the corresponding figures of the enclosed drawings to better understand the diagram itself. The curve "a" shows the pressure trend in the chamber "A". The curve "b" shows the pressure trend in the chamber B. The curve "c" shows the pressure trend in the chamber "C".

As previously said, thanks to the present invention it is possible to realize a machine having a particularly simple mechanical structure which allows an advantageous curing cycle both as regards the production costs and the quality of the finished product. Moreover, a mould according to the present invention can advantageously be used both for curing raw tires and for reconstructing or covering used tire treads. Further advantages of the present invention arise from the possibility of using a relatively high number of sectors so as to ensure a more homogeneous circularity of the shape assumed by the mould and a more precise correspondence between the engraving in the tire and the theoretical or project engraving. The system described above, for example, allows the use of a number of sectors comprised between ten and one hundred units depending on the tire size.

Besides, the sectors 3 are connected to each other so that their respective front sides form a continuous surface.

Due to the absence of mechanical elements for moving the sectors 3, the machine structure is simplified and, besides, allows a more effective thermal insulation of the machine itself with a reduction of energy consumption.

In addition, it is possible to vary the diameter of the group formed by the sectors 3 and by the sheath 15 by simply introducing one or more sectors 3 into the sheath or by replacing one or more sectors with other sectors of different sizes without necessarily replacing the whole group. It is also possible to realize the sectors 3 through a micro-fusion process as well as through conventional mechanical working.

The heating of the chambers A, B and C can be carried out according to any modality. Said heating, for example, can take place by means of vulcanization fluids such as nitrogen, air, water vapour or water which are heated and pressurized according to known modalities.

It goes without saying that it is possible to use moulds of different sizes according to the circumference and to the section or size of the tires to be treated.

In practice, the execution details may equally vary as regards the elements which have been shown and described and the indicated materials remaining within the solution idea that has been adopted and within the limits of the protection offered by the present patent.

## Claims

1. Machine for curing raw tire carcasses, comprising a structure with a horizontal lower crown (1) and a horizontal upper crown (2) between which more vertical sectors (3) can be radially moved with respect to said crowns (1) and (2), wherein the said sectors (3) exhibit an inner side, turned towards a central zone of the machine, whose surface is engraved for moulding a tread design on the tire carcasses introduced in the machine, the machine further comprising a fixed cylindrical skirt (4) which supports and houses the elements positioned therein and to which an upper lid (5) can be fixed and a central zone (C) for an inflatable curing bladder (7) which, in cooperation with said sectors (3) and with shaped surfaces (8, 9) respectively provided by the lower crown (1) and the lid (5), determines the moulding of the tire tread and flanks, the said sectors (3) being united to each other by means of a body (15) whose external surface delimits a first annular chamber (A) in cooperation with the said skirt (4) and the said crowns (1, 2), **characterized in that** the said body (15) exhibits surfaces (16, 17U, 17L) which delimit a second annular chamber (B) extending at least partially between the said first chamber (A) and the said central zone (C), and **in that** the said chambers (A) and (B) are connected with pressuring/de-pressuring means (PS) whose coordinated action on the body (15) which connects the sectors (3) determines the centrifugal or centripetal motion of the same sectors (3) in function of the pressure difference resulting between the cambers (A) and (B).

2. Machine according to claim 1 **characterized in that** the second annular chamber (B) is doubled; being formed by two chambers parallel to each other.

3. Machine according to claims 1 and 2 **characterized in that**, when it is operative, an annular chamber (B) is adjacent to the said lower crown (1) and an annular chamber (B) is adjacent to the said upper crown.

4. Machine according to claim 1 **characterized in that** the said body (15) is made by an elastic sheath wherein the said sectors (3) are housed.

5. Machine according to claim 4 **characterized in that** the said sheath (15) is provided with an upper and a lower heel (16) destined to be in contact with the said upper crown (2) and, respectively, with the said lower crown (1).

6. Machine according to claim 5 **characterized in that** the said sheath (15) exhibits two front lips (17U, 17L) which are vertically distanced from the said heels (16).

7. Method of curing a tyre by using a machine according to claim 1 **characterized in that** it comprises the following steps: - in an early step, the machine is open, with the sectors (3) drawn back, with the lid (5) raised, and with said first chamber (A) de- pressurized for keeping the sectors (3) drawn back; - at a subsequent step, a tire (PC) is dropped into the machine, so that the lower bead of the tire is in contact with one (8) of said shaped surfaces and, while the membrane (7) is partially pressurized, the lid (5) is lowered, so that the top bead of the tire is in contact with the other shaped surface (9), then the lid (5) is fixed to the skirt (4); - subsequently, the first chamber (A) is pressurized, said sectors (3) consequently moving radially and centripetally, and air is sucked from the second chamber (B) and, after that, when the second chamber (B) is closed, the latter is pressurized, equalizing the pressure of the first chamber (A) and of the central chamber (C) where, in the meantime, the pressure is brought to the vulcanization value; - the machine is maintained in this configuration for a preset time; - then, the pressure of the chamber (A) is brought to the atmospheric pressure, so the sectors (3) move back centrifugally, and the second chamber (B) and the membrane (7) are de-pressurized and the first chamber (A) is further de-pressurized; - then, the lid (5) is unlocked, the membrane (7) is moved away and the cured tire is extracted, while the depression in the first chamber (A) is maintained for the time necessary to the extraction of the cured tire and to the introduction of another tire to be cured in the machine

8. Machine according to claim 1 **characterized in that** it comprises induction means for heating said sectors (3).

9. Machine according to claims 1 and 4 **characterized in that** between the sheath (15) and the sectors (3) are placed two elastic rings (153), an upper one and a lower one, each of which has a plurality of projections (154) which fit in corresponding cavities of the inner face of the sheath (15) and of each sector (3).

10. Machine according to claim 4 **characterized in that** the sheath (15) is formed by a single body or by more segments.

11. Machine according to claim 1 **characterized in that** said sectors (3) move in a synchronized way both centripetally and centrifugally.

12. Machine according to claim 1 **characterized in that** the number of said sectors (3) is comprised between ten and one hundred.

13. Machine according to claim 1 **characterized in that** said sectors (3) are linked to each other and their internal sides form a continuous surface.

## Patentansprüche

1. Maschine zum Vulkanisieren von Reifen-Rohkarkassen, die eine Struktur mit einer horizontalen unteren Krone (1) und einer horizontalen oberen Krone (2) umfasst, zwischen denen mehrere vertikale Sektoren (3) bezüglich der Kronen (1, 2) radial bewegt werden können, wobei diese Sektoren (3) eine dem Zentralbereich der Maschine zugewandte innere Seite aufweisen, deren Oberfläche graviert ist, um ein Laufflächenmuster auf der Reifenkarkasse zu formen, die in die Maschine eingeführt ist, wobei die Maschine weiterhin einen festen zylindrischen Schurz (4) umfasst, der in ihm positionierte Elemente trägt und umschließt und an dem ein oberer Deckel (5) befestigt werden kann, sowie eine zentrale Zone (C) für einen aufblasbaren Vulkanisierbalg (7), der, im Zusammenwirken mit den Sektoren (3) und mit geformten Oberflächen (8, 9) die jeweils an der unteren Krone (1) und dem Deckel (5) vorgesehen sind, das Formen der Reifen-Laufflächen und -flanken festlegt, wobei die Sektoren (3) miteinander vermittels eines Körpers (15) verbunden sind, dessen äußere Oberfläche eine erste ringförmige Kammer (A) im Zusammenwirken mit der Schürze (4) und den Kronen (1, 2) begrenzt, **dadurch gekennzeichnet, dass** der Körper (15) Oberflächen (16, 17U, 17L) aufweist, die eine zweite ringförmige Kammer (B) begrenzen, die sich zumindest teilweise zwischen der ersten Kammer (A) und der zentralen Zone (C) erstreckt, und dass die Kammern (A) und (B) mit Einrichtungen (PS) verbunden sind, die zum Aufbauen bzw. Abbauen eines Drucks dienen und deren koordinierte Einwirkung auf den Körper (15), der die Sektoren (3) verbindet, eine zentrifugale oder zentripetale Bewegung dieser Sektoren (3) in Abhängigkeit vom Druckunterschied zwischen den Kammern (A) und (B) bewirkt.

2. Maschine nach Anspruch 1, **dadurch gekennzeichnet, dass** die zweite ringförmige Kammer (B) dadurch verdoppelt ist, dass sie von zwei zueinander parallelen Kammern gebildet wird.

3. Maschine nach Anspruch 1 und 2, **dadurch gekennzeichnet, dass** dann, wenn sie arbeitet, eine ringförmige Kammer (B) der unteren Krone (1) benachbart ist und dass eine ringförmige Kammer (B) der oberen Krone benachbart ist.

4. Maschine nach Anspruch 1, **dadurch gekennzeichnet, dass** der Körper (15) von einem elastischen Mantel gebildet wird, in dem die Sektoren (3) untergebracht sind.

5. Maschine nach Anspruch 4, **dadurch gekennzeichnet, dass** der Mantel (15) einen oberen und einen unteren Absatz (16) aufweist, die dazu bestimmt sind, mit der oberen Krone (2) bzw. der unteren Krone (1) in Berührung zu stehen.

6. Maschine nach Anspruch 5, **dadurch gekennzeichnet, dass** der Mantel (15) zwei Frontlippen (17U, 17L) aufweist, die von den Absätzen (16) einen vertikalen Abstand aufweisen.

7. Verfahren zum Vulkanisieren eines Reifens unter Verwendung einer Maschine nach Anspruch 1, **dadurch gekennzeichnet, dass** es folgende Schritte umfasst:
- in einem ersten Schritt ist die Maschine offen, wobei die Sektoren (3) zurückgezogen sind, der Deckel (5) angehoben ist und die erste Kammer (A) keinen Druck aufweist, um die Sektoren (3) zurückgezogen zu halten,
- in einem nachfolgenden Schritt wird ein Reifen (PC) in die Maschine so eingebracht, dass der untere Reifenwulst mit der einen der geformten Oberfläche (8) in Berührung steht und es wird, während die Membran (7) teilweise unter Druck gesetzt wird, der Deckel (5) abgesenkt, so dass der obere Reifenwulst mit der anderen geformten Oberfläche (9) in Berührung steht, worauf der Deckel (5) an der Schürze (4) befestigt wird;
- danach wird die erste Kammer (A) unter Druck gesetzt, so dass sich die Sektoren (3) radial und zentripetal bewegen, und es wird Luft aus der zweiten Kammer (B) abgesaugt, worauf dann, wenn die zweite Kammer (B) geschlossen ist, letztere unter Druck gesetzt wird, um dadurch den Druck in der ersten Kammer (A) an den in der zentralen Kammer (C) anzugleichen, wobei in der Zwischenzeit der Druck auf den Vulkanisationswert gebracht wird,
- die Maschine wird für eine vorgegebene Zeit in dieser Konfiguration gehalten;
- dann wird der Druck in der Kammer (A) auf Atmosphärendruck gebracht, so dass sich die Sektoren (3) zentrifugal zurückbewegen und es wird der Druck von der zweiten Kammer (B) und der Membran (7) weggenommen und der Druck der ersten Kammer (A) wird weiter abgesenkt;
- dann wird der Deckel (5) entriegelt, die Membran (7) wird wegbewegt und der vulkanisierte Reifen wird herausgenommen, während die Druckabsenkung in der ersten Kammer (A) für die Zeit aufrecht erhalten wird, die für das Herausnehmen des vulkanisierten Reifens und das Einführung eines weiteren, zu vulkanisierenden Reifens in die Maschine erforderlich ist.

8. Maschine nach Anspruch 1, **dadurch gekennzeichnet, dass** sie Induktionseinrichtungen zum Erhitzen der Sektoren (3) umfasst.

9. Maschine nach Anspruch 1 und 4, **dadurch gekennzeichnet, dass** zwischen dem Mantel (15) und den Sektoren (3) zwei elastische Ringe (153) positioniert sind, nämlich ein oberer und ein unterer, von denen jeder eine Vielzahl von Vorsprüngen (154) aufweist, die in entsprechende Hohlräume der Innenfläche des Mantels (15) und eines jeden Sektors (3) passen.

10. Maschine nach Anspruch 4, **dadurch gekennzeichnet, dass** der Mantel (15) von einem einzigen Körper oder von mehreren Segmenten gebildet ist.

11. Maschine nach Anspruch 1, **dadurch gekennzeichnet, dass** die Sektoren (3) sich sowohl zentripetal als auch zentrifugal in synchronisierter Weise bewegen.

12. Maschine nach Anspruch 1, **dadurch gekennzeichnet, dass** die Anzahl der Sektoren (3) zwischen zehn und einhundert liegt.

13. Maschine nach Anspruch 1, **dadurch gekennzeichnet, dass** die Sektoren (3) miteinander verbunden sind und dass ihre Innenseiten eine kontinuierliche Oberfläche bilden.

## Revendications

1. Machine pour la vulcanisation de carcasses de pneumatiques crus, comprenant une structure avec une couronne horizontale inférieure (1) et une couronne horizontale supérieure (2) entre lesquelles plusieurs secteurs verticaux (3) peuvent être déplacés radialement par rapport à lesdites couronnes (1) et (2), ou lesdits secteurs (3) présentent une face intérieure, tournée vers une zone centrale de la machine, dont la surface gravée pour former sur les pneumatiques une bande de roulement insérés dans la machine, la machine comprenant, en outre, une carcasse cylindrique fixe (4) de support et loge les éléments positionnés à son intérieur et à laquelle un couvercle supérieur (5) peut être fixé et une zone centrale (C) pour une vessie gonflable de vulcanisation (7) qui, en coopération avec lesdits secteurs (3) et avec des surfaces profilées (8, 9) présentées par la couronne inférieure (1) et respectivement par le couvercle (5), détermine le moulage de la bande de roulement et des flancs, lesdits secteurs (3) état unis l'un l'autre par un corps (15) dont la surface externe délimite une première chambre annulaire (A) en coopération avec ladite carcasse (4) et avec lesdites couronnes (1, 2), **caractérisée en ce que** ledit corps (15) présente des surfaces (16, 17U, 17L) qui délimitent une deuxième chambre annulaire (B) s'étendant au moins partiellement entre la première chambre (A) et ladite zone centrale (C), et **en ce que** lesdites chambres (A) et (B) sont reliées à des moyens (PS ) de pressurisation et dépressurisation dont l'action coordonnée sur le corps (15) qui relie les secteurs (3) détermine le mouvement centrifuge ou centripète des mêmes secteurs (3) en fonction du différentiel de pression qui en résulte entre les chambres (A) et (B).

2. Machine selon la revendication 1, **caractérisée en ce que** la deuxième chambre annulaire (B) est double, étant formé par deux chambres parallèles les unes aux autres.

3. Machine selon les revendications 1 et 2, **caractérisée en ce que**, lorsque elle est active, une chambre annulaire (B) est adjacente à ladite couronne inférieure (1) et une chambre annulaire (B) est adjacente à ladite couronne supérieure.

4. Machine selon la revendication 1, **caractérisée en ce que** ledit corps (15) est constitué par une gaine élastique, dans lequel lesdits secteurs (3) sont logés.

5. Machine selon la revendication 4, **caractérisée en ce que** ladite gaine (15) présente un tallons supérieur et un inférieur (16), destinés à être en contact avec ladite couronne supérieure (2) et, respectivement, avec ladite couronne inférieure (1).

6. Machine selon la revendication 5, **caractérisé en ce que** ladite gaine (15) présente deux bords antérieurs (17U, 17L) verticalement éloignés desdits talons (16).

7. Procedé pour la vulcanisation d'un pneumatique en utilisant une machine selon la revendication 1, caractérisée en ce comprend les étapes suivantes:
- dans une première étape, la machine est ouverte, avec les secteurs (3) vers l'arrière, avec le couvercle (5) relevée, et avec ladite première chambre (A) hors pression pour maintenir les secteurs (3) vers l'arrière; - dans une étape successive, un pneumatique (PC) est abaissé dans la machine, de sorte que le talon inférieur du pneumatique est en contact avec une (8) desdites surfaces profilées et, tandis que la membrane (7) est partiellement mise sous pression, le couvercle (5) est abaissée, de sorte que le talon supérieur du pneu est en contact avec l'autre surface profilée (9), puis le couvercle (5) est fixée à la carcasse (4) ; - ensuite, la première chambre (A) est mise sous pression, par conséquent lesdits secteurs (3) se déplacent radialement et centripètement, et l'air est aspiré par la deuxième chambre (B) et, après cela, lorsque la deuxième chambre (B) est fermée, cette dernière est mise sous pression, en égalisant la pression de la première chambre (A) et de la chambre centrale (C) où, entre temps, la pression est portée à la valeur de vulcanisation;- la machine est maintenue dans cette configuration pendant un temps prédéterminé;- par la suite, la pression de la chambre (A) est amenée à la pression atmosphérique, de sorte que les secteurs (3) reculent par centrifugation, et la deuxième chambre (B) et la membrane (7) sont dépressurisées et la première chambre (A) est ultérieurement dépressurisée; - ensuite, le couvercle (5) est déverrouillé, la membrane (7) est éloignée et le pneumatique vulcanisé est extrait, tandis que la dépression dans la première chambre (A) est maintenue pendant le temps nécessaire à l'éloignement du pneu vulcanisé et l'introduction d'un autre pneu à vulcaniser dans la machine.

8. Machine selon la revendication 1, **caractérisée en ce qu'**elle comprend des moyens de chauffage par induction desdits secteurs (3).

9. Machine selon les revendications 1 et 4, **caractérisée en ce que** entre la gaine (15) et les secteurs (3) sont placés deux anneaux élastiques (153), un supérieure et un inférieure, dont chacun desquels a une pluralité de saillies (154) qui se logent dans des cavités correspondantes présentées par la face intérieure de la gaine (15) et par chacun des secteurs (3).

10. Machine selon la revendication 4, **caractérisée en ce que** la gaine (15) est formée par un corps unique ou elle est formée par plusieurs segments.

11. Machine selon la revendication 1, **caractérisés en ce que** lesdits secteurs (3) se déplacent de manière synchronisée soit dans la direction centripète que dans la direction centrifuge.

12. Machine selon la revendication 1, **caractérisée en ce que** le nombre desdits secteurs (3) est compris entre dix et cent.

13. Machine selon la revendication 1, **caractérisé en ce que** lesdits secteurs (3) sont reliés entre eux et leurs côtés internes forment une surface continue.
